# EUROPÄISCHE PATENTSCHRIFT

(11) **EP 1 431 092 B1**
(45) Veröffentlichungstag und Bekanntmachung des Hinweises auf die Patenterteilung: **27.02.2008**
(21) Anmeldenummer: 03029256.9
(22) Anmeldetag: 17.12.2003
(51) Int. Cl.: B60J 7/04

(54) **Fahrzeugdach mit einem Schiebedach**
Vehicle roof with a sliding roof
Toit de vehicule avec toit coulissant

(30) Priorität: 19.12.2002 DE 10259431
(43) Veröffentlichungstag der Anmeldung: 23.06.2004
(73) Patentinhaber: ADAM OPEL AG, 65423 Rüsselsheim (DE)
(72) Erfinder: Stahlhut, Richard, 63075 Offenbach (DE); Stever, Tobias, 65428 Rüsselsheim (DE)

(56) Entgegenhaltungen:
- EP-A- 0 999 080
- FR-A- 2 678 218
- US-A- 3 220 763
- US-A- 4 531 777
- US-A- 4 671 565
- US-A- 5 941 598
- US-E- R E34 098

## Beschreibung

Die Erfindung bezieht sich auf ein Fahrzeugdach mit einem Schiebedach, das einen in eine Fahrzeugdachöffnung eingesetzten Rahmen aufweist, wobei die Fahrzeugdachöffnung sich zu beiden Seiten eines von Hochstreben des Fahrzeuges getragenen mittleren Bereiches des Fahrzeugdaches erstreckt und wobei der Rahmen mindestens zwei Längsrahmenteile aufweist, die die Längskanten der Fahrzeugdachöffnung einfassen.

Derartige Fahrzeugdächer mit einem Schiebedach, das den größten Teil des Fahrzeugdaches umfasst, werden erst seit kurzer Zeit eingesetzt. Groß bedeutet in diesem Zusammenhang, dass sich die Fahrzeugdachöffnung nicht nur im vorderen Teil des Fahrzeugdaches befindet, sondern sich nahezu über die gesamte Länge des Daches erstreckt und dabei auch einen Bereich umfasst, der sich zwischen üblicherweise als B-Säulen bezeichneten Hochstreben des Fahrzeuges befindet.

Die Problematik dabei ist, dass das Dach zur Versteifung der Karosserie beiträgt. Bei Seitenkollisionen, bei denen die B-Säule die Hauptlast trägt, stützt sich diese an einem Bodenholm und einem Dachholm ab. Dieser gibt nach, wenn das Dach durch die Dachöffnung geschwächt ist. Dadurch ergeben sich tiefe Intrusionen der B-Säule in die Fahrgastzelle, die zu Verletzungen der Fahrzeuginsassen führen können.

Um dies zu vermeiden, wird das Fahrzeugdach normalerweise mit Spriegeln verstärkt, von denen sich zumindest einer zwischen den beiden B-Säulen im mittleren Bereich des Daches erstreckt. Wenn das Dach aber durch die Fahrzeugdachöffnung unterbrochen ist, lassen sich derartige Spriegel nicht mehr einsetzen. Man hat daher bisher den Rahmen relativ steif ausgeführt. Dies ist aber in der Regel mit einem hohen Gewicht des Rahmens verbunden, was dem Ziel entgegen läuft, ein Fahrzeug möglichst leicht zu bauen.

So diskutiert die EP 0 999 080 A2 eine Möglichkeit, um ein Fahrzeugdach zu versteifen, wobei ein Querträger mittels Auslegern am Fahrzeugrahmen auf Höhe der B-Säulen angeordnet ist, und zur zusätzlichen Befestigung von Sonnenrollos, Beleuchtungseinrichtungen oder Ablagefächern verwendet werden kann.

Aus der DE 32 22 419 ist ein Fahrzeugdach bekannt, das allerdings nur eine kleine Fahrzeugdachöffnung vor den B-Säulen aufweist. Bei diesen ist der hintere Querrahmenteil seitlich bis zum Dachholm verlängert und bildet auf diese Weise einen Spriegel. Auch die DE 30 32 122 beschäftigt sich mit der Versteifung eines Daches, das mit einer Fahrzeugdachöffnung versehen ist. Auch hier befindet sich diese nur vor den B-Säulen. Der Rahmen des Schiebedaches erstreckt sich allerdings über den mittleren Bereich des Daches nach hinten und bildet dort eine Kassette zur Aufnahme des zurückgeschobenen Schiebedachteiles. Eine Querversteifung ist im Bereich der B-Säulen vorgesehen, die seitlich mit einem am Dachöffnungsrand nach unten abgeknickten Flansch verbunden ist.

Man hat auch schon daran gedacht, die Dachholme mit einem Spriegel zu verbinden, der unter dem Rahmen verläuft. Da der Rahmen jedoch je nach Bauweise relativ tief in die Fahrgastzelle eintaucht, kann der Spriegel die in das Dach eingeleiteten Kräfte nicht unmittelbar abstützen, sondern knickt vielmehr nach unten aus, wobei seine Versteifungswirkung verloren geht.

Die Erfindung beruht somit auf dem Problem, ein Dach mit einer in Längsrichtung ausgedehnten Dachöffnung zur Aufnahme eines Rahmens für ein Schiebedach in ausreichendem Maße zu versteifen.

Zur Lösung des Problems sieht die Erfindung vor, dass in dem mittleren Bereich des Fahrzeugdaches zwischen den beiden Längsrahmenteilen eine sich an deren Innenseite abstützende und dort befestigte Querstrebe vorhanden ist.

Statt also die Rahmenteile zu verstärken, wird eine zusätzliche Querstrebe zwischen den Längsrahmenteilen eingezogen. Auf diese Weise wird der Rahmen mit einfachen Mitteln versteift, so dass bei einem Seitenaufprall das Dach eine genügende Festigkeit aufweist, so dass die B-Säule aufgrund des Aufpralles nicht nach innen knickt.

Dabei hat sich gezeigt, dass die Versteifung insbesondere dann besonders effektiv wird, wenn die Querstrebe sich im oberen Teil des Rahmens, also auf Höhe des Fahrzeugdaches, befindet. Im Speziellen besitzen die Längsrahmenteile einen nach außen weisenden Flansch, mit denen sie an der Unterseite des Fahrzeugdaches befestigt sind. In etwa auf dieser Höhe wird die Querstrebe mit den Längsrahmenteilen verbunden.

Die Querstrebe kann relativ einfach mit den Längsrahmenteilen verbunden werden, indem sich an deren Innenseiten schnabelförmige Fortsätze befinden, die mit einem Schlitz versehen sind. In diesen Schlitz werden die flachen Enden der Querstrebe eingesteckt und dort verschweißt, vernietet oder in sonstiger Weise befestigt.

Weitere ebenfalls geeignete Befestigungsarten sind weiter unten im Ausführungsbeispiel beschrieben.

Der in Längsrichtung ausgedehnte Rahmen ermöglicht es, zwei Schiebedachteile einzusetzen, nämlich ein vorderes verschiebbares und ein hinteres unbewegliches Schiebedachteil, wobei die Querstrebe unterhalb der Stoßkante zwischen den beiden Schiebedachteilen verläuft. Dadurch ergibt sich zum einen ein gewisser ästhetischer Eindruck, da die Stoßkante optisch verdeckt wird. Zum anderen liegt auch ein technischer Grund vor: Im Bereich der aneinanderstoßenden Kanten der Schiebedachteile ist die Versteifung des Rahmens durch die Schiebedachteile selbst besonders schwach, so dass gerade hier eine zusätzliche Querverstrebung notwendig ist.

Die Längsrahmenteile weisen des Weiteren eine Führungsschiene für das verschiebbare Schiebedachteil auf, wobei die Querstrebe oberhalb der Führungsschiene an dem Längsrahmenteil abgestützt ist. In diesen Schienen kann das vordere Schiebedachteil unmittelbar geführt werden. Hier kann aber auch ein Mechanismus geführt werden, der es erlaubt, das vordere Schiebedachteil über das hintere Schiebedachteil zu führen.

Wie allgemein üblich, kann die Querstrebe mit sich in ihrer Längsrichtung verlaufenden Sicken und/oder Rippen versteift werden. Außerdem kann sie, in Querrichtung des Fahrzeuges betrachtet, ein wenig konvex nach oben gewölbt sein. Dies sind ebenfalls Maßnahmen, die einem plötzlichen Ausknicken der Querstrebe bei Belastung entgegen wirken. Durch die leicht konvexe Wölbung ergibt sich ein Spannungsbogen, der auch hohen Belastungen standhält bzw. nur zögerlich nachgibt. Um diese konvexe Wölbung zu erreichen, sind die Schlitze, die die Enden der Querstrebe aufnehmen, schräg nach oben gerichtet.

Eine andere Lösung sieht vor, dass für den Fall, dass das Schiebedach aus zwei, nämlich einem vorderen verschiebbaren und einem hinteren unbeweglichen Schiebedachteil besteht, die Querstrebe mit dem hinteren Schiebedachteil verbunden ist.

Derartige Schiebedächer kommen insbesondere dann zum Einsatz, wenn beide Schiebedachteile transparent ausgeführt sind. Um Sonneneinstrahlungen in diesem Fall zu verhindern, sind an den Führungsschienen der Längsrahmenteile Rollos oder Lamellen geführt.

Zur Verdeutlichung des Erfindungsgedankens werden im Folgenden Ausführungsbeispiele in der Figuren näher erläutert. Dazu zeigen:
- Fig. 1: eine perspektivische Darstellung eines Rahmens für eine Fahrzeugdachöffnung mit einer Querstrebe;
- Fig. 2: eine perspektivische Darstellung einer nicht erfindungsgemäßen Ausführung der Verbindung eines Längsrahmenteils mit der Querstrebe;
- Fig. 3: eine Querschnittsdarstellung des in Figur 2 gezeigten Bereiches;
- Fig. 4: einen Längsschnitt durch das Schiebedach;
- Fig. 5: eine perspektivische darstellung einer erfindungsgemäßen Ausführung der Verbindung des Längsrahmenteils mit der Querstrebe und
- Fig. 6: eine perspektivische Darstellung einer zweiten erfindungsgemäßen Ausführung der Verbindung des Längsrahmenteils mit der Querstrebe.

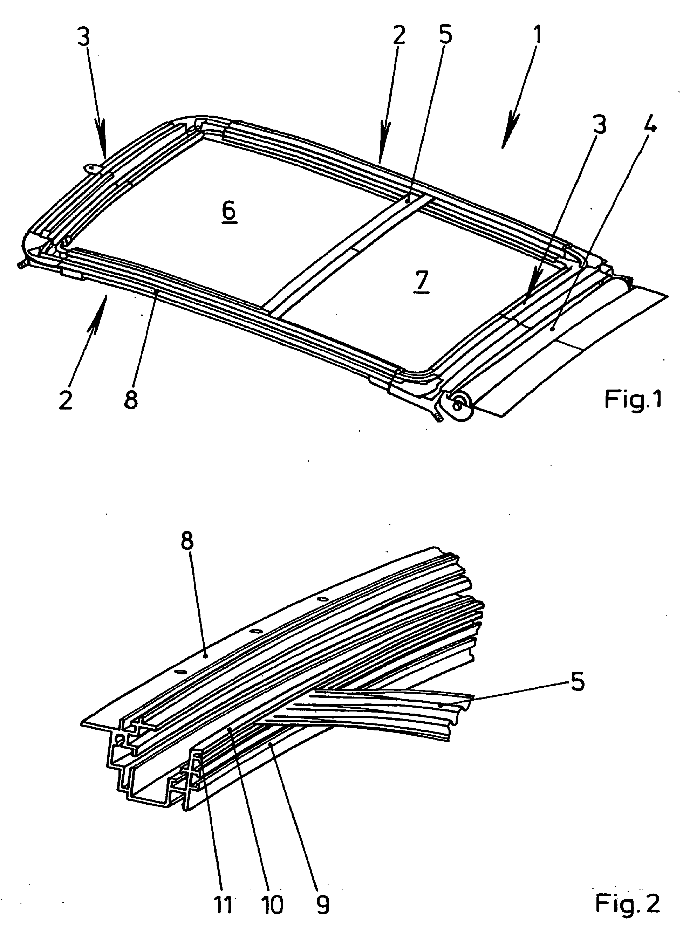

Zunächst wird auf die Figur 1 Bezug genommen. Diese zeigt einen Rahmen 1 für eine Fahrzeugdachöffnung, der aus Aluminiumprofilen zusammengesetzt ist. Er weist im einzelnen zwei parallel verlaufende Längsrahmenteile 2 sowie ein vorderes und ein hinteres Querrahmenteil 3 auf. Am hinteren Querrahmenteil, dem Heckteil, ist eine Rolle 4 mit einem Rollo befestigt.

Der Rahmen 1 wird an einer Fahrzeugdachöffnung in etwa gleicher Größe von unten angeschraubt, wobei am bzw. im Rahmen ein vorderes Schiebedachteil sowie ein hinteres Schiebedachteil angeordnet sind, die den Rahmen und damit die Fahrzeugdachöffnung verschließen.

Zwischen den beiden Längsrahmenteilen 2 befindet sich eine Querstrebe 5, die die Rahmenöffnung in einen vorderen, etwas größeren Teil 6 und einen hinteren, etwas kleineren Teil 7 unterteilt.

Nachdem der Rahmen 1 in eine Fahrzeugdachöffnung eingesetzt ist, befindet sich die Querstrebe 5, was hier nicht näher gezeigt ist, in etwa zwischen den B-Säulen des Fahrzeuges, die das Dach tragen.

Üblicherweise werden die Hochstreben der Fahrzeugseitenteile als A-, B- und C-Säulen bezeichnet, wobei die A-Säulen die vordere Begrenzung der Fahrgastzelle bilden und in ihren oberen Bereichen einen Teil des Rahmens der Windschutzscheibe darstellen. Die B-Säulen begrenzen den Rahmen für die vorderen Seitentüren nach hinten. Die C-Säulen bilden schließlich die hintere Begrenzung der Fahrgastzelle.

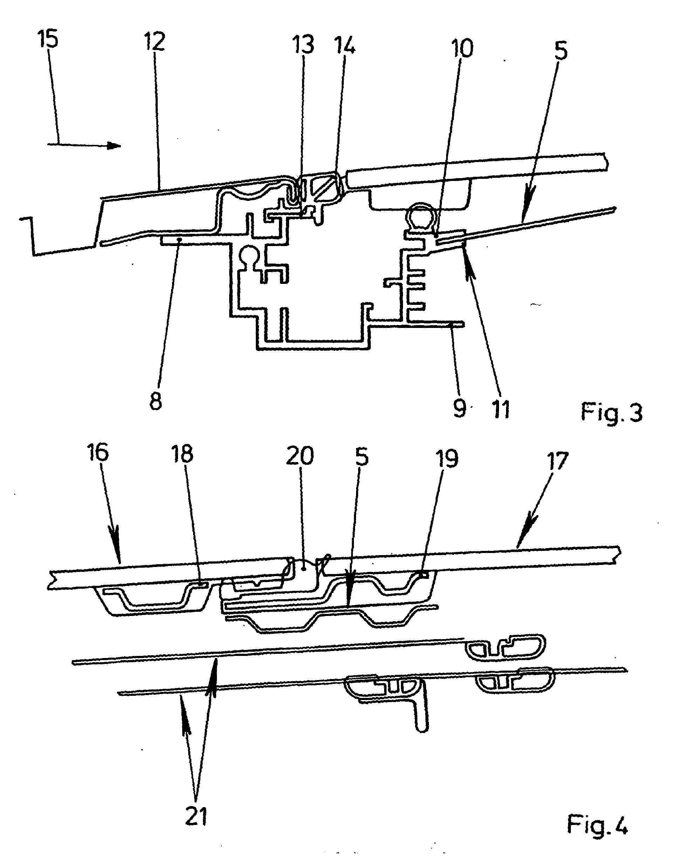

Die Längsrahmenteile 2 (siehe auch Fig. 2 und 3) werden von Aluminiumprofilen gebildet, die in etwa einen U-förmigen Querschnitt aufweisen, wobei ein nach außen gerichteter Flansch als Befestigungsflansch 8 dient, mit dem der Rahmen an der Unterseite des Dachöffnungsrandes befestigt ist. Weitere Flansche 9 dienen als Auflage oder als Schiene für die Schiebedachteile bzw. für das Rollo.

Nach einer nicht erfindungsgemäßen Ausführung befindet sich an der nach innen gerichteten Seite des Profils im oberen Teil ein schnabelförmiger Fortsatz 10, der einen Schlitz 11 bildet. Dieser Schlitz 11 dient zur Aufnahme der abgeflachten Enden der Querstrebe 5, wie dies gut in Figur 2 zu erkennen ist. Deutlich wird dies auch noch einmal in der Querschnittsdarstellung der Figur 3. Hier erkennt man auch noch einmal die Funktion der Flansche des Längsrahmenteiles. Der Befestigungsflansch 8 ist an der Unterseite des stehen gebliebenen Randes 12 des Fahrzeugdaches befestigt. Ein oberer Abschlussrand 13 der äußeren Wand des Profils dient der Befestigung einer Dichtung 14 zwischen dem Rand 12 des Fahrzeugdaches und einem Schiebedachteil.

Weitere kleine Flansche 9, die an der Innenwand des U-förmigen Profils nach innen gerichtet sind, dienen der Führung des Rollos. In dem Profil befindet sich, was hier nicht näher dargestellt ist, ein Schiebemechanismus, um zur Öffnung des vorderen Rahmenteiles das vordere Schiebedachteil nach hinten zurückschieben zu können.

In der Schnittdarstellung ist auch noch einmal gut zu erkennen, dass die Querstrebe 5 nach oben konvex gewölbt ist, und dass dazu der Schlitz 10 leicht schräg nach oben ausgerichtet ist.

Die Kräfte, die gemäß dem dargestellten Pfeil 15 in das Fahrzeugdach eingeleitet werden, werden somit unmittelbar in die Querstrebe 5 eingeleitet, die durch ihre Bogenform eine ausreichende Gegenkraft erzeugt.

Wie der Figur 2 zu entnehmen ist, weist die Querstrebe 5 Sicken und Rillen auf, um ein frühzeitiges Ausknicken zu vermeiden.

Figur 4 zeigt noch einmal einen Längsschnitt durch das Schiebedach. Man erkennt, dass sich die Querstrebe 5 unterhalb der Stoßkante zwischen dem vorderen und dem hinteren Schiebedachteil 16, 17 befindet. Man erkennt auch, dass die Schiebedachteile durch Versteifungsprofile 18, 19 stabilisiert sind, wobei das Versteifungsprofil 19 des hinteren Schiebedachteils 17 unter das vordere Schiebedachteil 16 greift und eine Dichtung 20 zum Verschließen der Stoßkante trägt. Unterhalb der transparent ausgeführten Schiebedachteile 16, 17 befinden sich bewegliche Sonnenschutzlamellen 21, die an den schon erwähnten Führungen an den Längsrahmenteilen 2 gehalten sind.

Mit der Querstrebe 5, die sich zwischen den beiden Längsrahmenteilen 2 erstreckt, wird eine effektive Versteifung des in Längsrichtung des Fahrzeuges ausgedehnten Rahmens bewirkt. Die Schwächung des Daches, die mit der großen Fahrzeugdachöffnung einhergeht, wird auf diese Weise wirkungsvoll kompensiert. Die Anordnung ist einfach und fügt sich trotz allem harmonisch in die Schiebedachkonstruktion ein.

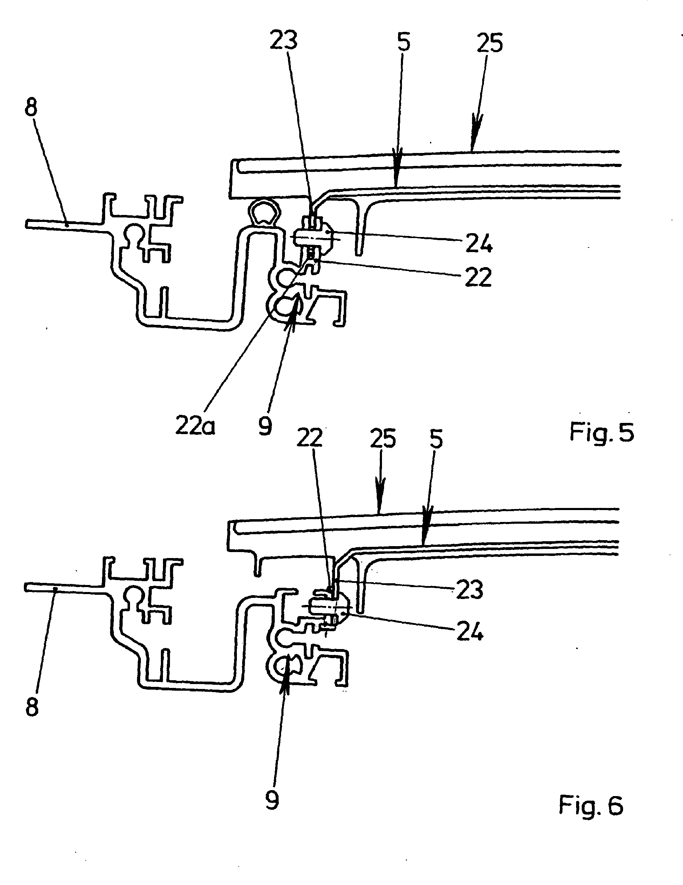

Die Figuren 5 und 6 zeigen eine erfindungsgemäßen Ausführungen der Verbindung der Querstrebe 5 mit den Längsrahmenteilen 2. Dazu weist das Längsrahmenteil einen vertikal verlaufenden Flansch 22 auf. Parallel dazu befindet sich das abgewinkelte Ende 23 der Querstrebe 5, das entweder an der Innenseite des Flansches 22 anliegt oder aber in einem Schlitz 22a im Flansch 22 von oben eingesteckt ist. In beiden Fällen wird das Ende 23 der Querstrebe 5 mit dem Flansch 22 im Überlappungsbereich mittels mehrerer Schrauben 24 verschraubt.

Die Querstrebe kann außerdem, wie in den Figuren 5 und 6 gezeigt, im hinteren Schiebedachteil, das hier als transparenter und nicht verschiebbarer Glasdeckel 25 ausgeführt ist, integriert sein. Dazu wird die Querstrebe 5 mit dem Glasdeckel 25 verklebt oder zumindest teilweise mit diesem zusammen umschäumt

Die Querstrebe 5 kann außerdem als Halter für Anbauteile, z. B. von Leselampen, für die hintere Sitzreihe des Fahrzeuges dienen.

### Bezugszeichenliste

- 1: Rahmen
- 2: Längsrahmenteil
- 3: Querrahmenteil
- 4: Rolle
- 5: Querstrebe

- 6: vorderer Teil der Rahmenöffnung
- 7: hinterer Teil der Rahmenöffnung
- 8: Befestigungsflansch
- 9: Flansch
- 10: schnabelförmiger Fortsatz

- 11: Schlitz
- 12: Rand
- 13: oberer Abschlussrand
- 14: Dichtung
- 15: Pfeil

- 16: vorderes Schiebedachteil
- 17: hinteres Schiebedachteil
- 18: Versteifungsprofil
- 19: Versteifungsprofil
- 20: Dichtung

- 21: Sonnenschutzlamellen
- 22: Flansch
- 22a: Schlitz
- 23: Ende
- 24: Schrauben
- 25: Glasdeckel

## Patentansprüche

1. Fahrzeugdach mit einem Schiebedach, das einen in eine Fahrzeugdachöffnung eingesetzten Rahmen (1) aufweist, wobei die Fahrzeugdachöffnung sich zu beiden Seiten eines von Hochstreben des Fahrzeuges getragenen mittleren Bereiches des Fahrzeugdaches erstreckt und wobei der Rahmen (1) mindestens zwei Längsrahmenteile (2) aufweist, die die Längskanten der Fahrzeugdachöffnung einfassen, wobei in dem mittleren Bereich des Fahrzeugdaches zwischen den beiden Längsrahmenteilen (2) eine sich an deren Innenseiten abstützende und dort befestigte Querstrebe (5) vorhanden ist, **dadurch gekennzeichnet, dass** die Querstrebe in Querrichtung des Fahrzeuges betrachtet konvex nach oben gewölbt ist, dass ein Längsrahmenteil (2) einen vertikal verlaufenden Flansch (22) aufweist an dessen Innenseite ein abgewinkeltes Ende (23) der Querstrebe (5) anliegt, und dass das Ende (23) der Querstrebe (5) und der Flansch (22), miteinander verschraubt sind.

2. Fahrzeugdach nach Anspruch 1, **dadurch gekennzeichnet, dass** die Längsrahmenteile (2) einen nach außen weisenden Flansch (8) aufweisen, der an der Unterseite des Fahrzeugdaches befestigt ist und dass die Querstrebe (5) auf Höhe des Flansches (8) mit den Längsrahmenteilen (2) verbunden ist.

3. Fahrzeugdach nach Anspruch 2 oder 3, **dadurch gekennzeichnet, dass** zur Aufnahme der Enden der Querstrebe (5) an den Innenseiten der Längsrahmenteile jeweils ein nach innen gerichteter schnabelförmiger Fortsatz (10) mit einem Schlitz (11) vorhanden ist, in den das zugehörige Ende der Querstrebe (5) eingesteckt ist.

4. Fahrzeugdach nach einem der vorhergehenden Ansprüche, **dadurch gekennzeichnet, dass** das Schiebedach aus zwei, nämlich einem vorderen verschiebbaren und einem hinteren unbeweglichen Schiebedachteil (16, 17) besteht, und dass die Querstrebe (5) unterhalb der Stoßkante zwischen den beiden Schiebedachteilen (16, 17) verläuft.

5. Fahrzeugdach nach Anspruch 2, **dadurch gekennzeichnet, dass** die Längsrahmenteile (2) Führungsschienen für das verschiebbare Schiebedachteil (16) aufweisen und dass die Querstrebe (5) oberhalb der Führungsschiene an den Längsrahmenteilen (2) abgestützt ist.

6. Fahrzeugdach nach einem der vorhergehenden Ansprüche, **dadurch gekennzeichnet, dass** die Querstrebe (5) mit sich in ihrer Längsrichtung verlaufenden Sicken und/oder Rippen versehen ist.

7. Fahrzeugdach nach Anspruch 1, **dadurch gekennzeichnet, dass** die Schlitze (11) in den schnabelförmigen Fortsätzen (10) schräg nach oben gerichtet sind.

8. Fahrzeugdach nach Anspruch 1, **dadurch gekennzeichnet, dass** das Schiebedach aus zwei, nämlich einem vorderen verschiebbaren und einem hinteren unbeweglichen Schiebedachteil (16, 17) besteht, und dass die Querstrebe (5) mit dem hinteren Schiebedachteil verbunden ist.

9. Fahrzeugdach nach einem der vorhergehenden Ansprüche, **dadurch gekennzeichnet, dass** die Schiebedachteile (16, 17) transparent sind.

## Claims

1. Vehicle roof with a sliding roof, which comprises a frame (1) inserted into a vehicle roof aperture, wherein the vehicle roof aperture extends to both sides of a middle region of the vehicle roof that is supported by vertical struts of the vehicle and wherein the frame (1) comprises at least two longitudinal frame parts (2) that border the longitudinal edges of the vehicle roof aperture, wherein in the middle region of the vehicle roof between the two longitudinal frame parts (2) there is a cross-strut (5), which is supported on the inner side of the longitudinal frame parts and fastened there, **characterized in that** the cross-strut, viewed in transverse direction of the vehicle, is curved convexly upwards, that a longitudinal frame part (2) has a vertically extending flange (22), against the inner side of which lies an angled end (23) of the cross-strut (5), and that the end (23) of the cross-strut (5) and the flange (22) are screw-fastened to one another.

2. Vehicle roof according to claim 1, **characterized in that** the longitudinal frame parts (2) have an outwardly directed flange (8), which is fastened to the underside of the vehicle roof, and that the cross-strut (5) is connected at the height of the flange (8) to the longitudinal frame parts (2).

3. Vehicle roof according to claim 2 or 3, **characterized in that** for receiving the ends of the cross-strut (5) there is on each of the inner sides of the longitudinal frame parts (2) an inwardly directed beak-shaped extension (10) having a slot (11), into which the associated end of the cross-strut (5) is inserted.

4. Vehicle roof according to one of the preceding claims, **characterized in that** the sliding roof consists of two sliding roof parts, namely a front displaceable and a rear stationary sliding roof part (16, 17), and that the cross-strut (5) extends underneath the butt edge between the two sliding roof parts (16, 17).

5. Vehicle roof according to claim 2, **characterized in that** the longitudinal frame parts (2) have guide rails for the displaceable sliding roof part (16) and that the cross-strut (5) is supported above the guide rail on the longitudinal frame parts (2).

6. Vehicle roof according to one of the preceding claims, **characterized in that** the cross-strut (5) is provided with beads and/or ribs extending in its longitudinal direction.

7. Vehicle roof according to claim 1, **characterized in that** the slots (11) in the beak-shaped extensions (10) are directed obliquely upwards.

8. Vehicle roof according to claim 1, **characterized in that** the sliding roof comprises two sliding roof parts, namely a front displaceable and a rear stationary sliding roof part (16, 17), and that the cross-strut (5) is connected to the rear sliding roof part.

9. Vehicle roof according to one of the preceding claims, **characterized in that** the sliding roof parts (16, 17) are transparent.

## Revendications

1. Toit de véhicule avec un toit ouvrant, comportant un châssis (1) installé dans une ouverture de toit du véhicule, l'ouverture de toit du véhicule s'étendant des deux côtés d'une zone centrale du toit du véhicule supportée par des montants du véhicule et le châssis (1) comportant au moins deux parties de châssis longitudinales (2) qui bordent les arêtes longitudinales de l'ouverture de toit du véhicule, sachant que dans la zone centrale du toit du véhicule entre les deux parties de châssis longitudinales (2) se trouve une entretoise (5) s'appuyant sur la partie intérieure de celles-ci et fixée dessus, **caractérisé en ce que** l'entretoise est cintrée vers le haut un peu de manière convexe, vue dans le sens transversal du véhicule, **en ce qu'**une partie de châssis longitudinale (2) comporte une bride (22) passant verticalement, contre le côté intérieur de laquelle est placée une extrémité pliée (23) de l'entretoise (5) et **en ce que** l'extrémité (23) de l'entretoise (5) et la bride (22) sont vissées ensemble.

2. Toit de véhicule selon la revendication 1, **caractérisé en ce que** les parties de châssis longitudinales (2) comportent une bride (8) tournée vers l'extérieur, qui est fixée au côté inférieur du toit du véhicule et **en ce que** l'entretoise (5) est reliée aux parties de châssis longitudinales (2) à la hauteur de la bride (8).

3. Toit de véhicule selon la revendication 2 ou 3, **caractérisé en ce qu'**un prolongement en forme de bec (10) dirigé respectivement vers l'intérieur sur les côtés intérieurs de la partie de châssis longitudinale, sert à loger les extrémités de l'entretoise (5), avec une fente (11), dans laquelle est insérée l'extrémité associée de l'entretoise (5).

4. Toit de véhicule selon l'une des revendications précédentes, **caractérisé en ce que** le toit ouvrant se compose de deux parties de toit ouvrant (16, 17) notamment une partie avant coulissante et une partie arrière fixe et **en ce que** l'entretoise (5) passe en-dessous du bord entre les deux parties de toit ouvrant (16, 17).

5. Toit de véhicule selon la revendication 2, **caractérisé en ce que** les parties de châssis longitudinales (2) présentent des rails de guidage pour la partie du toit coulissante (16) et **en ce que** l'entretoise (5) est appuyée au-dessus du rail de guidage contre les parties de châssis longitudinales (2).

6. Toit de véhicule selon l'une des revendications précédentes, **caractérisé en ce que** l'entretoise (5) est équipée avec des collets et/ou des nervures passant dans son sens longitudinal.

7. Toit de véhicule selon la revendication 1, **caractérisé en ce que** les fentes (11) sont dirigées vers le haut en biais dans les prolongements en forme de bec (10).

8. Toit de véhicule selon la revendication 1, **caractérisé en ce que** le toit ouvrant se compose de deux parties de toit ouvrant (16, 17) notamment une partie avant coulissante et une partie arrière fixe et **en ce que** l'entretoise (5) est reliée à la partie arrière de toit ouvrant.

9. Toit de véhicule selon l'une des revendications précédentes, **caractérisé en ce que** les parties de toit coulissantes (16, 17) sont transparentes.
